# FASCICULE DE BREVET EUROPEEN

(11) **EP 1 055 552 B1**
(45) Date de publication et mention de la délivrance du brevet: **06.10.2004**
(21) Numéro de dépôt: 00401427.0
(22) Date de dépôt: 23.05.2000
(51) Int. Cl.: B60N 2/46

(54) **Agencement d'accoudoir réglable pour véhicule automobile**
Verstellbare Armlehne für Kraftfahrzeuge
Adjustable armrest for motor vehicles

(30) Priorité: 26.05.1999 FR 9906642
(43) Date de publication de la demande: 29.11.2000
(73) Titulaire: Peugeot Citroen Automobiles SA, 92200 Neuilly sur Seine (FR)
(72) Inventeur: Lafond, Didier, 25420 Bart (FR)
(74) Mandataire: Berger, Helmut

(56) Documents cités:
- EP-A- 0 670 241
- DE-A- 4 225 673
- DE-A- 19 542 198
- GB-A- 2 194 305
- US-A- 5 722 703

## Description

L'invention concerne un agencement d'accoudoir selon le préambule de la revendication 1.

Des agencements d'accoudoir de ce type sont connus, par exemple, du document US-A-5 722 703.

L'invention a pour but de proposer un agencement d'accoudoir amélioré.

Pour atteindre ce but, l'agencement d'accoudoir selon l'invention comporte les caractéristiques indiquées à la partie caractérisante de la revendication 1.

Selon une réalisation avantageuse de l'invention, l'agencement d'accoudoir comporte des moyens de rappel de l'accoudoir dans sa position avancée haute et un dispositif de verrouillage et de déverrouillage de l'accoudoir dans sa position reculée basse, qui est pourvu d'une commande à tringle de déverrouillage.

Selon un autre mode de réalisation avantageux, la commande de déverrouillage comporte un élément de levier coudé pivotant, dont une extrémité sert d'extrémité d'actionnement tandis que l'autre extrémité sert de moyen de déplacement axial de la tringle de déverrouillage.

Selon un autre mode de réalisation préferé de l'invention, la semelle comporte un levier de verrouillage et de déverrouillage de la semelle dans sa position de fermeture du bac de rangement.

Selon encore un autre mode de réalisation avantageux de l'invention, l'agencement comporte un levier de verrouillage et de déverrouillage du bac de rangement dans sa position de fermeture du volume de rangement.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en perspective de l'accoudoir de l'agencement selon l'invention.
La figure 2 est une vue en perspective de la semelle de support de l'accoudoir de l'agencement selon l'invention.
La figure 3 est une vue en coupe de l'agencement d'accoudoir selon l'invention, suivant la ligne III-III de la figure 2 et montre l'accoudoir dans ses positions avancée haute et reculée basse.
La figure 4 est une vue en coupe de l'agencement d'accoudoir selon l'invention, suivant la ligne IV-IV de la figure 2.
La figure 5 est une vue en coupe de l'agencement d'accoudoir selon l'invention, suivant la ligne V-V de la figure 1.
La figure 6 est une vue en coupe similaire à la figure 5, mais montre l'agencement dans la position d'ouverture de la boîte de rangement.
La figure 7 est une vue en coupe de l'agencement d'accoudoir selon l'invention, selon la ligne VII-VII de la figure 1.
La figure 8 est une vue similaire à la figure 7, mais montre l'agencement dans la position d'ouverture du volume de rangement.

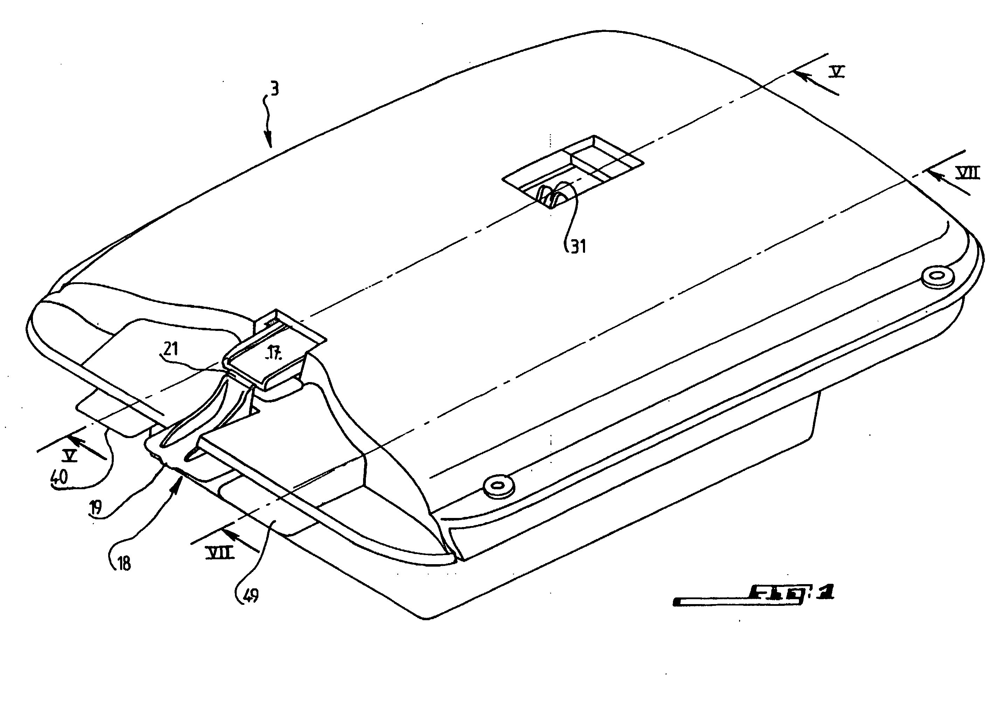

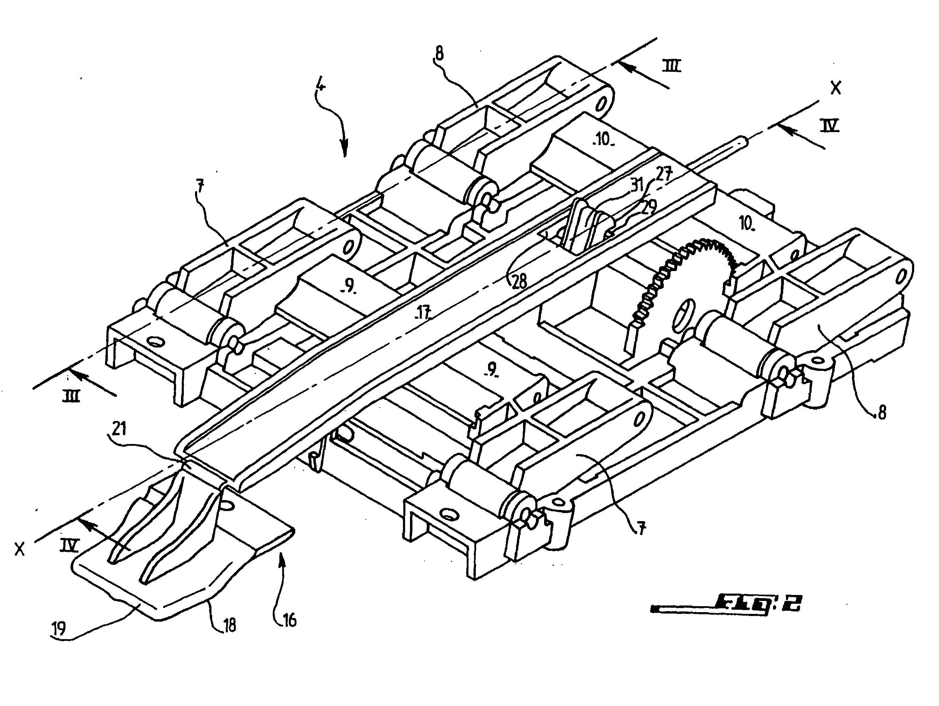

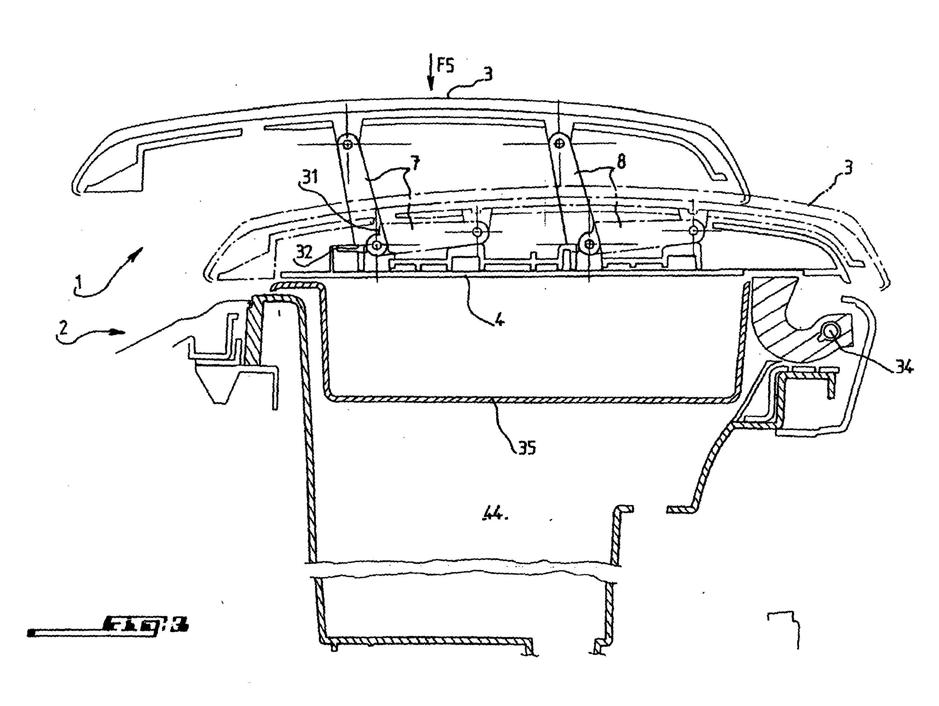

L'agencement d'accoudoir selon l'invention, indiqué de façon générale par la référence 1 (figure 3), est conçu pour être disposé au niveau de l'axe du véhicule, entre les deux sièges des passagers avant et est monté sur une structure fixe 2.

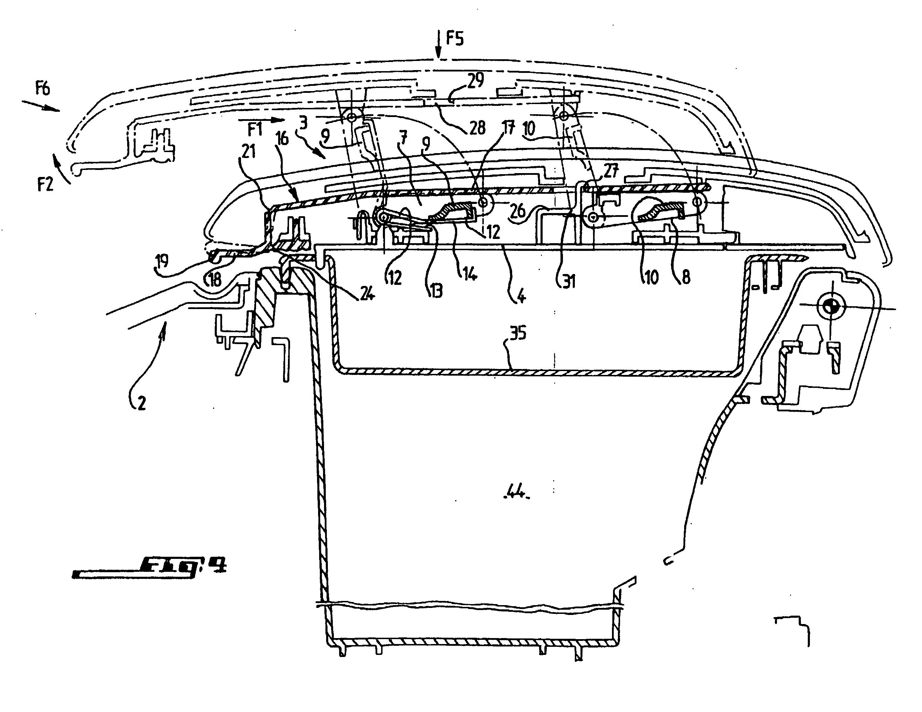

Conformément aux figures, l'agencement comporte un accoudoir proprement dit 3 tel que représenté sur la figure 1, par exemple d'une largeur de 200 mm pour une longueur de 300 mm. L'accoudoir 3 est monté sur une semelle de support 4, se déplaçant entre une position basse reculée et une position haute avancée, comme on le voit sur la figure 3, par l'intermédiaire de deux paires de biellettes, à savoir une paire de biellettes avant 7 et une paire de bielles arrière 8. La figure 3 montre ces deux positions d'accoudoir, la position haute en traits pleins et la position basse en traits mixtes. En se référant à la figure 2, on constate que les biellettes 7 et 8 des deux paires sont disposées symétriquement par rapport à l'axe longitudinal médian de l'accoudoir 2 et sont solidarisées en rotation par une traverse respectivement 9 et 10. A chaque dispositif de biellettes et traverse est associé un ressort 12 (figure 4) qui est disposé sensiblement au milieu de la traverse correspondante et conçu pour solliciter le dispositif à biellettes, et ainsi l'accoudoir 3, de sa position reculée basse vers sa position avancée haute. Dans l'exemple représenté, chaque ressort est un ressort de torsion dont l'axe est aligné avec les axes d'articulation de la paire de biellettes qui sont reliées par la traverse sur laquelle agit le ressort. Les branches 13 et 14 du ressort prennent appui respectivement sur la semelle 4 et la traverse 9 ou 10.

L'accoudoir est verrouillé dans sa position reculée basse à l'aide d'un dispositif de verrouillage 16 et déverrouillable par actionnement de l'occupant du siège correspondant. A cette fin, le dispositif de commande de verrouillage et de déverrouillage comporte une tringle de commande 17 (figure 4) déplaçable sensiblement axialement et un organe d'actionnement 18 réalisé sous la forme d'un levier coudé à deux bras sensiblement perpendiculaires l'un à l'autre. L'extrémité avant 19 du levier sert d'extrémité de commande tandis que l'extrémité arrière 21 est articulée à l'extrémité correspondante de la tringle de commande 17.

Le levier 18 est monté pivotant au niveau de la jonction de ses deux bras, à savoir en 24, à la structure de l'accoudoir 3. Comme il ressort des figures, la tringle de commande 17 et le levier 18 sont réalisés en une seule pièce et la zone d'articulation 21 ainsi que l'axe de pivotement du levier sont formés par des zones souples, par exemple affaiblies, de cet ensemble de commande. Concernant la zone de pivotement 24, elle est formée par une patte en saillie, souple, dont l'extrémité est fixée à l'accoudoir.

Pour assurer le verrouillage de l'accoudoir à l'aide du dispositif de commande 16, la semelle 4 comprend un organe 26 comportant un élément en forme de crochet de verrouillage 27. La tringle de commande 17 comporte un évidement 28 (figure 2) dont le bord 29, côté extrémité libre, s'engage, dans la position verrouillée de l'accoudoir 3, sous le crochet 27 et se désengage de ce dernier lorsque la tringle 17 se déplace suivant la flèche F1 (figure 4) sous l'effet de l'actionnement de l'extrémité 19 du levier 18 suivant la flèche F2, la tringle étant disposée de façon à se déplacer suivant son axe.

Les biellettes 7 et 8, après le déverrouillage de l'accoudoir, sont forcées par les ressorts 12 à pivoter jusqu'au-delà de la position verticale vers une position inclinée vers l'avant dans laquelle elles prennent appui par un épaulement 31 sur une butée 32 montée fixe sur la semelle 4 (figure 3).

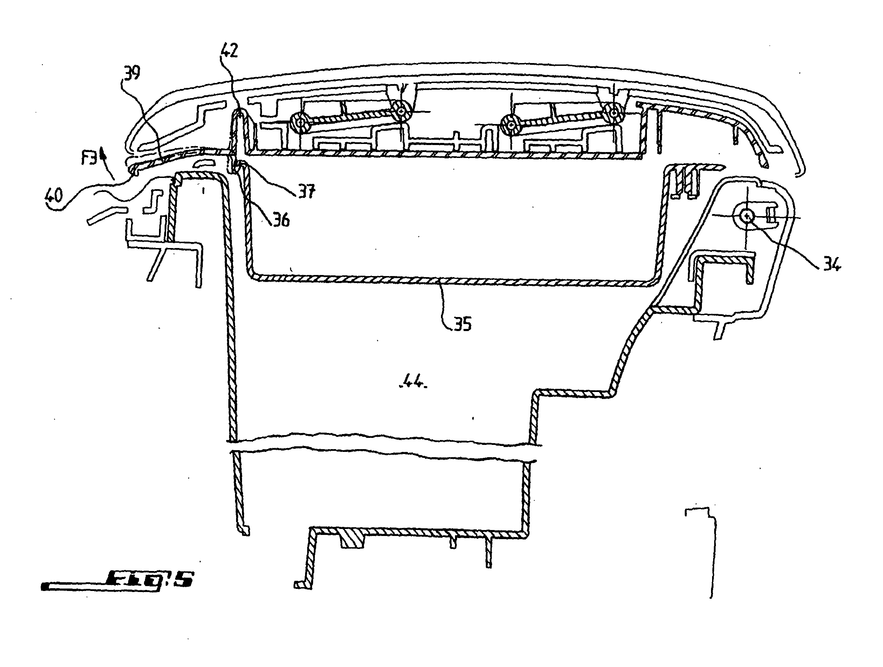

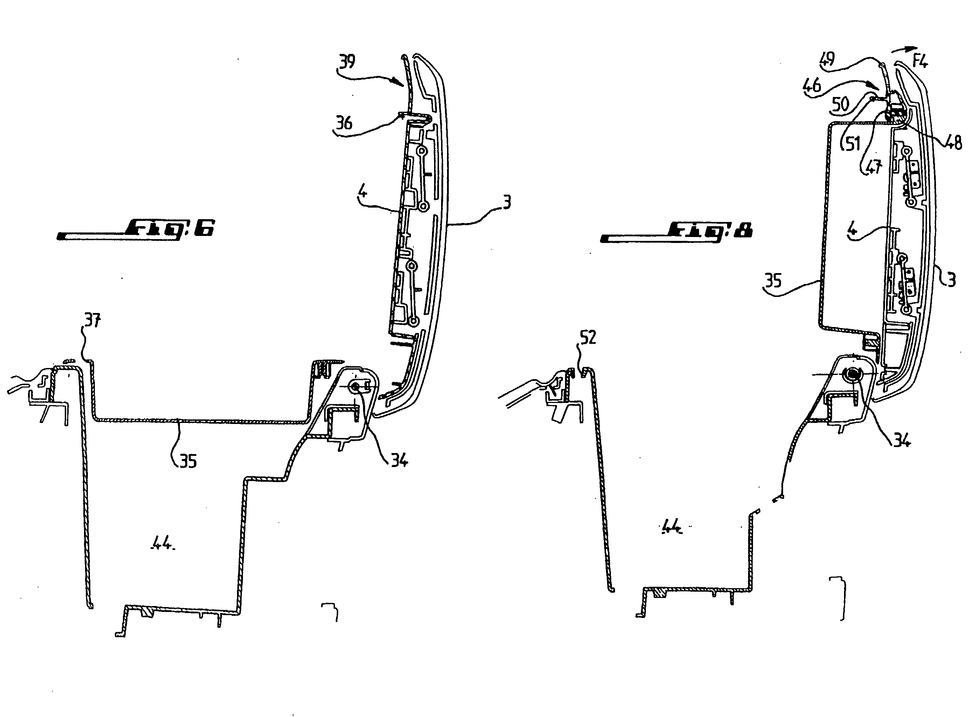

En se reportant aux figures 5 et 6, on constate que l'ensemble formé par l'accoudoir 3 et la semelle 4 est monté pivotant sur la structure fixe du véhicule, autour d'un axe 34 situé à l'arrière de la structure fixe 2. Ainsi, la semelle 4 constitue le couvercle pivotant d'un bac de rangement 35 intégré à la structure fixe. Le bac de rangement 35 est ouvert par pivotement en arrière, vers une position sensiblement verticale, de la semelle. La semelle est verrouillée dans sa position de fermeture du bac 35 par l'intermédiaire d'un bec de verrouillage 36 venant en prise sous une portion repliée 37 du bord supérieur avant du bac. Le bec de verrouillage 36 fait saillie au niveau du coude d'un levier d'actionnement coudé 39, en forme de palette, dont l'extrémité avant 40 constitue la partie d'actionnement tandis que l'autre extrémité de la palette, qui s'étend sensiblement perpendiculairement à la partie d'actionnement, est articulée en 42 à l'avant de la semelle 4. L'articulation est réalisée sous la forme d'une zone souple affaiblie de la semelle, le levier 39 étant réalisé en une pièce avec celle-ci.

Il ressort des figures 5 et 6 que, pour ouvrir le bac, l'utilisateur actionne l'extrémité avant 40 de la palette 39 en direction de la flèche F3, ce qui assure le désengagement du bec de verrouillage 36 de la contre-pièce 37 solidaire du bac. Par conséquent, l'ensemble formé par la semelle et l'accoudoir est libre de pivoter autour de l'axe 34 jusqu'à sa position d'ouverture du bac représentée sur la figure 6. En se référant à la figure 1, on constate que la palette d'ouverture du bac est située à côté de la palette centrale de verrouillage et de déverrouillage de l'accoudoir.

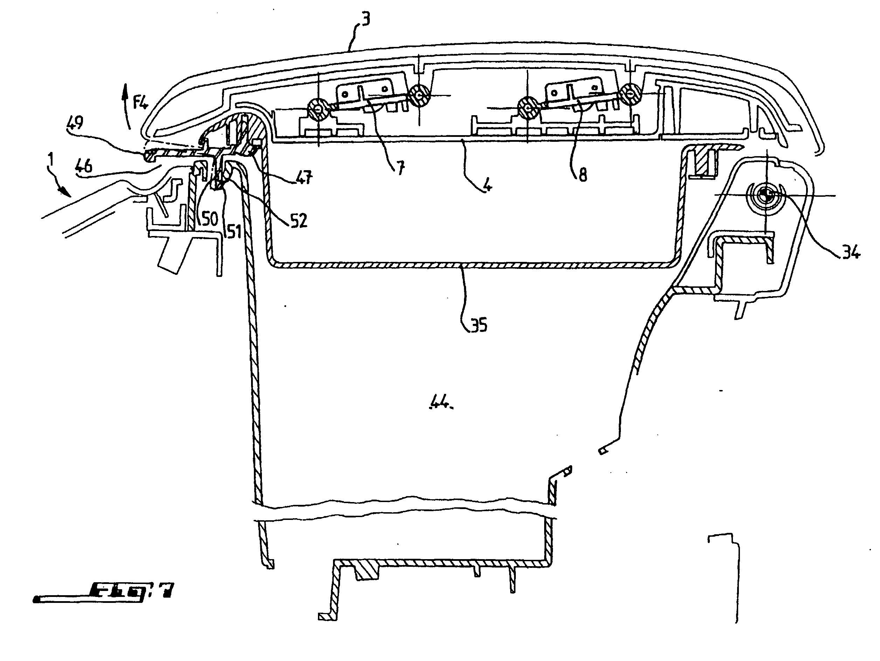

Les figures 7 et 8 montrent que le bac de rangement 35 constitue le couvercle pivotant d'un volume de rangement 44 également intégré à la structure fixe 2. A cette fin, le bord supérieur avant du bac est pourvu d'un organe de commande en forme de palette 46. La palette est articulée à une extrémité en 47 sur le rebord 48 du bac. L'extrémité libre avant 49 de la palette constitue la partie d'actionnement. Entre les deux extrémités de la palette s'étend sensiblement verticalement vers le bas une patte 50 qui se termine par un crochet 51. Ce crochet, dans la position de fermeture du volume 44, vient en prise sous une partie appropriée 52 prévue sur le bord avant du volume.

Comme il ressort des figures 7 et 8, lorsque l'utilisateur exerce, par un doigt, une force en direction de la flèche F4, le crochet 51 se désengage de la partie 52 et l'ensemble formé par le bac, la semelle et l'accoudoir est libre de pivoter, autour de l'axe 34, jusqu'à sa position d'ouverture du volume de rangement 44. En se référant à la figure 1, on voit que la palette 46 est située à côté de la palette centrale d'actionnement de l'accoudoir, sur le côté opposé à celui où se trouve la palette d'actionnement 39 permettant l'accès au bac de rangement.

Concernant le fonctionnement de l'agencement d'accoudoir selon l'invention, il ressort déjà de la description qui vient d'être faite. Il suffit donc de rappeler que l'utilisateur peut remonter l'accoudoir dans sa position haute avancée en actionnant la palette 18 suivant la flèche F2 (figure 4). L'actionnement de la palette entraîne la translation de la tringle de commande 17 et le décrochage de celle-ci, en 27, de la semelle. L'accoudoir se déplace alors suivant une trajectoire en arc de cercle sous l'action des ressorts de torsion 12 jusqu'à venir en butée sur la semelle. L'accoudoir est maintenu dans sa position haute sous l'effet des ressorts et du fait que les biellettes, lors du pivotement, ont dépassé la verticale. Par conséquent, un effort suivant la flèche F5 (figure 4), c'est-à-dire sensiblement verticalement, n'entraîne pas la descente de l'accoudoir. Pour abaisser celui-ci, l'utilisateur doit fournir un effort suivant la flèche F6, ce qui entraîne la descente de l'accoudoir jusqu'au verrouillage de la tringle de commande sous le crochet 27 de la semelle.

Si l'utilisateur veut avoir accès au bac de rangement 35 ou au volume de rangement 44, il suffit d'actionner la palette 39 ou la palette 46 et de faire pivoter en arrière l'ensemble formé par la semelle et l'accoudoir ou l'ensemble formé par le bac, la semelle et l'accoudoir.

## Revendications

1. Agencement d'accoudoir réglable pour véhicule automobile, du type comprenant une partie inférieure fixe (2), pourvue d'une semelle (4) sur laquelle est monté l'accoudoir (3), se déplaçant entre une position basse et une position haute, par l'intermédiaire d'un dispositif de biellettes (7,8) du type parallélogramme, l'accoudoir (3) étant mobile entre une position reculée basse et une position avancée haute, la semelle de support (4) de l'accoudoir (3) étant montée pivotante sur la partie fixe (2) de l'agencement d'accoudoir et constituant le couvercle pivotant d'un bac de rangement (35) intégré à la partie fixe (2), **caractérisé en ce que** le bac de rangement (35) est monté pivotant sur la partie fixe (2) de l'agencement d'accoudoir et constitue le couvercle pivotant de fermeture d'un volume de rangement (44) intégré à ladite partie fixe (2).

2. Agencement selon la revendication 1, **caractérisé en ce qu'**il comporte des moyens de rappel (12) de l'accoudoir (3) dans sa position avancée haute et un dispositif de verrouillage et de déverrouillage (16) de l'accoudoir (3) dans sa position reculée basse, qui est pourvu d'une commande à tringle de déverrouillage (17).

3. Agencement selon la revendication 2, **caractérisé en ce que** la commande de déverrouillage comporte un élément de levier coudé pivotant (18) dont une extrémité (19) sert d'extrémité d'actionnement tandis que l'autre extrémité (21) sert de moyen de déplacement axial de la tringle de déverrouillage (17).

4. Agencement selon l'une des revendications 1 à 3, **caractérisé en ce que** la semelle (4) comporte un levier (39) de verrouillage et de déverrouillage de la semelle (4) dans sa position de fermeture du bac de rangement (35).

5. Agencement selon l'une des revendications 1 à 4, **caractérisé en ce qu'**il comporte un levier (46) de verrouillage et de déverrouillage du bac de rangement (35) dans sa position de fermeture du volume de rangement (44).

6. Agencement selon l'une des revendications 1 à 5, **caractérisé en ce que** les biellettes (7, 8) occupent, dans la position haute avancée de l'accoudoir (3), une position inclinée en appui sur une butée (32) de la semelle (4), de l'autre côté de la verticale par rapport à leur position à l'état bas de l'accoudoir.

## Claims

1. An adjustable armrest arrangement for an automobile vehicle, of the type comprising a fixed lower part (2) which is provided with a base (4) on which the armrest (3) is mounted so that it can be displaced a between a lower position and an upper position via a connecting rod device (7, 8) of the parallelogram type, wherein the armrest (3) can be moved between a lower, retracted position and an upper, extended position, the supporting base (4) of the arm rest (3) being swivel-mounted on the fixed part (2) of the armrest arrangement and forming the swivelling cover of a storage box (35) which is incorporated in the fixed part (2), **characterised in that** the storage box (35) is swivel-mounted on the fixed part (2) of the armrest arrangement and constitutes the swivelling closure cover of a storage volume (44) which is incorporated in said fixed part (2).

2. An arrangement according to claim 1, **characterised in that** it comprises means (12) for returning the armrest (3) to its upper, extended position and a device (16) for locking and unlocking the armrest (3) in its lower, retracted position, which device is provided with an unlocking rod ( 17) operating system.

3. An arrangement according to claim 2, **characterised in that** the unlocking operating system comprises a pivoting elbow lever element (18), one end (19) of which serves as an operating end whilst the other end (21) serves as a means of axial displacement for the unlocking rod (17).

4. An arrangement according to any one of claims 1 to 3, **characterised in that** the base (4) comprises a lever (39) for locking and unlocking the base (4) in its position of closure of the storage box (35).

5. An arrangement according to any one of claims 1 to 4, **characterised in that** it comprises a lever (46) for locking and unlocking the storage box at (35) in its position of closure of the storage volume (44).

6. An arrangement according to any one of claims 1 to 5, **characterised in that** in the upper, extended position of the armrest (3) the connecting rods (7, 8) occupy an inclined position and are supported on a stop (32) of the base (4) on the other side of the vertical with respect to their position in the lower situation of the armrest.

## Patentansprüche

1. Verstellbare Armlehnenanordnung für Kraftfahrzeuge, vom Typ mit einem festen Unterteil (2), das mit einer Sohle (4) versehen ist, auf der die Armlehne (3) montiert ist, welche zwischen einer unteren Stellung und einer oberen Stellung mittels einer parallelogrammartigen Schwenkarmvorrichtung (7, 8) verstellbar ist, wobei die Armlehne (3) zwischen einer unteren zurückgefahrenen Stellung und einer oberen vorgeschobenen Stellung beweglich ist, wobei die Tragsohle (4) der Armlehne (3) an dem festen Teil (2) der Armlehnenanordnung schwenkbeweglich gelagert ist und einen verschwenkbaren Deckel eines Ablagefachs (35) bildet, das im festen Teil (2) integriert ist, **dadurch gekennzeichnet, dass** das Ablagefach (35) am festen Teil (2) der Armlehnenanordnung schwenkbeweglich gelagert ist und den verschwenkbaren Deckel zum Verschließen eines Ablageraums (44) bildet, der im genannten festen Teil (2) integriert ist.

2. Anordnung nach Anspruch 1, **dadurch gekennzeichnet, dass** sie Mittel (12) zum Zurückstellen der Armlehne (3) in ihre obere vorgeschobene Stellung und eine Vorrichtung (16) zum Ver- und Entriegeln der Armlehne (3) in ihrer unteren zurückgefahrenen Stellung enthält, die mit einer Entriegelungssteuerung mit Gestänge (17) versehen ist.

3. Anordnung nach Anspruch 2, **dadurch gekennzeichnet, dass** die Entriegelungssteuerung ein verschwenkbares Winkelhebelelement (18) enthält, von dem ein Ende (19) als Betätigungsende dient, während das andere Ende (21) als Mittel zur axialen Verstellung des Entrieglungsgestänges (17) dient.

4. Anordnung nach einem der Ansprüche 1 bis 3, **dadurch gekennzeichnet, dass** die Sohle (4) einen Hebel (39) zum Ver- und Entriegeln der Sohle (4) in ihrer Schließstellung zum Verschließen des Ablagefachs (35) enthält.

5. Anordnung nach einem der Ansprüche 1 bis 4, **dadurch gekennzeichnet, dass** sie einen Hebel (46) zum Ver- und Entriegeln des Ablagefachs (35) in seiner Schließstellung zum Verschließen des Ablageraums (44) enthält.

6. Anordnung nach einem der Ansprüche 1 bis 5, **dadurch gekennzeichnet, dass** die Schwenkarme (7, 8) in der oberen vorgeschobenen Stellung der Armlehne (3) eine geneigte Stellung in Anlage an einem Anschlag (32) der Sohle (4) auf der anderen Seite der Senkrechten bezüglich ihrer Position in der unteren Stellung der Armlehne einnehmen.
